# EUROPÄISCHE PATENTSCHRIFT

(11) **EP 1 148 271 B1**
(45) Veröffentlichungstag und Bekanntmachung des Hinweises auf die Patenterteilung: **16.03.2005**
(21) Anmeldenummer: 01108895.2
(22) Anmeldetag: 10.04.2001
(51) Int. Cl.: F16H 48/08, F16H 57/04, B60K 17/16

(54) **Achsgetriebe für ein Kraftfahrzeug**
Axle gearing for a vehicle
Transmission pour un essieu d' un véhicule

(30) Priorität: 22.04.2000 DE 10020079
(43) Veröffentlichungstag der Anmeldung: 24.10.2001
(73) Patentinhaber: GETRAG Getriebe- und Zahnradfabrik Hermann Hagenmeyer GmbH & Cie KG, 74199 Untergruppenbach (DE)
(72) Erfinder: Rühle, Günter, 74369 Löchgau (DE); Mastroianni, Mark, 13123 Talbot, MI 48070 (US)
(74) Vertreter: Steil, Christian, Dipl.-Ing.

(56) Entgegenhaltungen:
- EP-A- 0 612 938
- DE-A- 1 530 516
- DE-A- 19 624 002
- FR-A- 2 020 198
- US-A- 2 478 180
- US-A- 4 699 230

## Beschreibung

Die vorliegende Erfindung betrifft ein Achsgetriebe für ein Kraftfahrzeug, mit
- einem Gehäuse, das zwei Gehäuseteile aufweist, die jeweils wenigstens einen Befestigungspunkt zur Lagerung des Gehäuses an einer Karosserie des Kraftfahrzeuges aufweisen und entlang einer Trennebene miteinander verbunden sind, wobei die Trennebene in einem Winkel von mehr als 40° in bezug auf die Ausgangswellen ausgerichtet ist,
- einer Eingangswelle, die mit einer Antriebswelle des Kraftfahrzeugs verbindbar ist,
- zwei Ausgangswellen, die etwa senkrecht zu der Eingangswelle ausgerichtet sind und die jeweils mit einem Rad des Kraftfahrzeugs verbindbar sind, und
- einem in dem Gehäuse gelagerten Differentialgetriebe.

Ein derartiges Achsgetriebe für Kraftfahrzeuge ist bekannt aus der US-A-2,478,180.

Solche Achsgetriebe werden in der Regel in Kraftfahrzeugen mit Standardbauweise, d.h. Anordnung des Motors vorne und Antrieb der hinteren Räder, eingesetzt. Das Achsgetriebe liegt dabei zwischen den beiden hinteren Rädern des Kraftfahrzeugs.

Das in dem Achsgetriebe enthaltene Differentialgetriebe ermöglicht Differenzdrehzahlen der Hinterräder, beispielsweise bei Kurvenfahrten.

Das Gehäuse umfaßt bei heutigen Getrieben in der Regel ein Hauptgehäuse und einen Gehäusedeckel, wie es beispielsweise bekannt ist aus der DE 36 26 442 A1 oder der DE-OS 1 801 917. Befestigungspunkte zur Lagerung des Gehäuses an der Karosserie des Kraftfahrzeuges sind in der Regel an dem Deckel, teilweise auch an dem Hauptgehäuse, teilweise an beiden Gehäuseteilen vorhanden.

Das Hauptgehäuse ist in der Regel an seinem vorderen Ende mit einer Öffnung zur Lagerung der Eingangswelle versehen und an seinem hinteren Ende mit einer Montageöffnung, die mittels des Deckels verschließbar ist. Über die Montageöffnung wird das Differentialgetriebe montiert.

Die in der Regel plane Trennfuge zwischen Hauptgehäuse und Gehäusedeckel ist durch eine Dichtung abgedichtet, in der Regel eine Flüssig-, eine Flach- oder Formdichtung. Die Trennfuge liegt bei Getrieben, wie sie aus der DE 36 26 442 A1 bekannt sind, in einer Trennebene, die etwa parallel zu den Ausgangswellen angeordnet ist.

Im Gegensatz hierzu liegt die Trennebene der Trennfuge bei dem Achsgetriebe der US-A-2,478,180 in einer Trennebene, die etwa senkrecht zu den Ausgangswellen angeordnet ist.

In der obengenannten DE-OS 1 801 917 ist bereits vorgeschlagen, bei einem Getriebe mit Hauptgehäuse und Gehäusedeckel mit einer Trennfuge parallel zu den Ausgangswellen in dem Deckel einen Ölsammelraum vorzusehen. Der Ölsammelraum ist nach oben hin geöffnet und ist durch eine Öffnung mit dem Hauptraum des Gehäuses verbunden. Während des Betriebes wird Öl in den Sammelraum geschleudert. Die Öffnung ist so ausgelegt, daß ein hinreichend hoher Ölpegel im Hauptraum vorhanden ist, ohne daß Panscharbeit und Öltemperatur unzulässig ansteigen.

Ein ähnliches Konzept ist bereits aus der US-A-5,709,135 bekannt. Das Getriebegehäuse ist zweiteilig und nach der Art einer Muschel aufgebaut, mit einer horizontalen Trennebene. In dem unteren Gehäuseteil ist im Bereich des Eintritts der Eingangswelle ein Reservoir vorgesehen. Öl wird von einem Tellerrad des Differentials in das Reservoir geschleudert. Es ist keine Aussage getroffen, wie das Getriebegehäuse an der Fahrzeugkarosserie befestigt wird.

Aus der DE 196 24 002 C2 ist schließlich eine Mehrpunktlagerung eines Achsgetriebes bekannt gemäß dem Oberbegriff des Anspruchs 1. Das Getriebegehäuse weist ein Hauptgehäuse und einen Gehäusedeckel auf, mit einer Trennebene parallel zu den Ausgangswellen. An dem Hauptgehäuse und dem Gehäusedeckel sind Lagerstellen vorgesehen, die auf Kragarmen sitzen, die von dem Getriebegehäuse abstehen. Die Kragarme können an dem Getriebegehäuse angeformt sein und einen hohlen Querschnitt besitzen.

Vor diesem Hintergrund liegt das der Erfindung zugrunde liegende Problem darin, ein verbessertes Achsgetriebe für ein Kraftfahrzeug anzugeben, wobei das Achsgetriebe leicht montierbar ist, einfach herstellbar ist, gut befestigbar ist und einen guten Wirkungsgrad bei insgesamt möglichst einfachem konstruktivem Aufbau hat. Diese Aufgabe wird bei dem eingangs genannten Achsgetriebe dadurch gelöst, daß wenigstens eines der zwei Gehäuseteile eine Ausbuchtung aufweist, an der außen ein Befestigungspunkt zum Lagern des Gehäuses ausgebildet ist, die generell parallel zu den Ausgangswellen ausgerichtet ist und die oberhalb eines Ruhe-Ölsumpfpegels im Gehäuse angeordnet ist, wobei innen am Eingang der Ausbuchtung ein Stauelement angeordnet ist, das einen Rückfluß von Öl, das in die Ausbuchtung geschleudert worden ist, zurück in das Gehäuse begrenzt.

Dadurch, daß die Trennebene schräg oder senkrecht in bezug auf die Ausgangswellen angeordnet ist, ergeben sich eine Reihe von Vorteilen, insbesondere eine leichtere Montierbarkeit und eine höhere Gestaltungsfreiheit.

Bei einer solchen Gehäusekonstruktion läßt sich die Gehäusesteifigkeit um die Ausgangswellenachse weitgehend konstant ausbilden. Folglich läßt sich die Vorspannung der Differentialgetriebelager in dem Gehäuse am Umfang gleichmäßig ausbilden.

Eine parallel zu den Ausgangswellen ausgerichtete Ausbuchtung ist bei dieser Anordnung der Trennebene auch dann einfach zu realisieren, wenn die Gehäuseteile gegossen werden.

Da die Ausbuchtung oberhalb eines Ruhe-Ölsumpfpegels in dem Gehäuse angeordnet ist, kann die Ausbuchtung bei hohen Drehzahlen zur Aufnahme von Öl genutzt werden, das durch die Schöpfwirkung des in dem Gehäuse gelagerten Differentialgetriebes, insbesondere durch dessen Tellerrad in die Ausbuchtung hinein geschleudert wird. Dadurch sinkt der Ölpegel, und die Ölpanscharbeit wird verringert, und dies ergibt eine geringere Wärmeentwicklung. Folglich verbessert sich der Wirkungsgrad.

Da am Eingang der Ausbuchtung ein Stauelement angeordnet ist, das einen Rückfluß von Öl, das in die Ausbuchtung geschleudert worden ist, zurück in das Gehäuse begrenzt, kann nur eine begrenzte Ölmenge pro Zeiteinheit aus der Ausbuchtung rückfließen, die bei höheren Drehzahlen geringer ist als die pro Zeiteinheit in die Ausbuchtung geschöpfte bzw. geschleuderte Ölmenge. Auf diese Weise wird bei hohen Drehzahlen Öl in der Ausbuchtung bzw. in dem durch die Ausbuchtung gebildeten Hohlraum aufgestaut. Bei niedrigen Drehzahlen und hohem Drehmoment ist die Schöpfwirkung geringer, und es wird nicht so viel Öl in der Ausbuchtung aufgestaut. Folglich steht dann das volle Ölvolumen zur Schmierung und Kühlung zur Verfügung.

Da ein Befestigungspunkt zum Lagern des Gehäuses außen an der Ausbuchtung ausgebildet ist, dienen die Ausbuchtungen als Hohlträger. Durch die Verwendung der Ausbuchtungen als Hohlträger ist eine steife Anbindung der Befestigungspunkte für die Lagerung des Gehäuses möglich.

Der durch die als Hohlträger ausgebildeten Ausbuchtungen gebildete Hohlraum wird als Speicherraum für das Öl genutzt.

Besonders bevorzugt ist es, wenn die Trennebene etwa senkrecht zu den Ausgangswellen ausgerichtet ist.

Auf diese Weise ist es besonders günstig, das Differential in das eine der zwei Gehäuseteile zu montieren.

Ferner bevorzugt ist es, wenn das Stauelement als Staublech ausgebildet ist, das am Eingang der Ausbuchtung befestigt ist.

Auf diese Weise läßt sich das Stauelement besonders günstig herstellen und montieren.

Gemäß einer weiteren bevorzugten Ausführungsform sind die zwei Gehäuseteile quer zur Ausrichtung der Ausgangswellen formschlüssig miteinander verbunden. Auf diese Weise werden Lagerkräfte des Getriebes über die formschlüssige Verbindung in Form beispielsweise eines Zentrierbundes übertragen.

Ferner ist es bevorzugt, wenn die zwei Gehäuseteile mittels einer O-Ringdichtung gegeneinander abgedichtet sind.

Auf diese Weise läßt sich die Dichtung der zwei Gehäuseteile besonders kostengünstig realisieren, insbesondere dann, wenn die Gehäuseteile quer zur Ausrichtung der Ausgangswellen formschlüssig miteinander verbunden sind.

Gemäß einer insgesamt bevorzugten Ausführungsform sind die zwei Gehäuseteile aus einem Leichtbaumaterial, insbesondere aus einer Magnesium- oder Aluminiumlegierung hergestellt.

Aufgrund der weitgehend konstanten Gehäusesteifigkeit um die Differentialachse, also um die Ausgangswellenachse herum, läßt sich für das Achsgetriebegehäuse ein Leichtbaumaterial verwenden. Die hierbei erforderliche höhere Vorspannung der Differentiallager wird gleichmäßig am Umfang auf diese Lager übertragen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine perspektivische Ansicht eines erfindungsgemäßen Achsgetriebes;
- Fig.: 2 eine schematische horizontale Schnittansicht eines erfindungsgemäßen Achsgetriebes; und
- Fig. 3: eine vertikale schematische Innenansicht eines Gehäusedeckels.

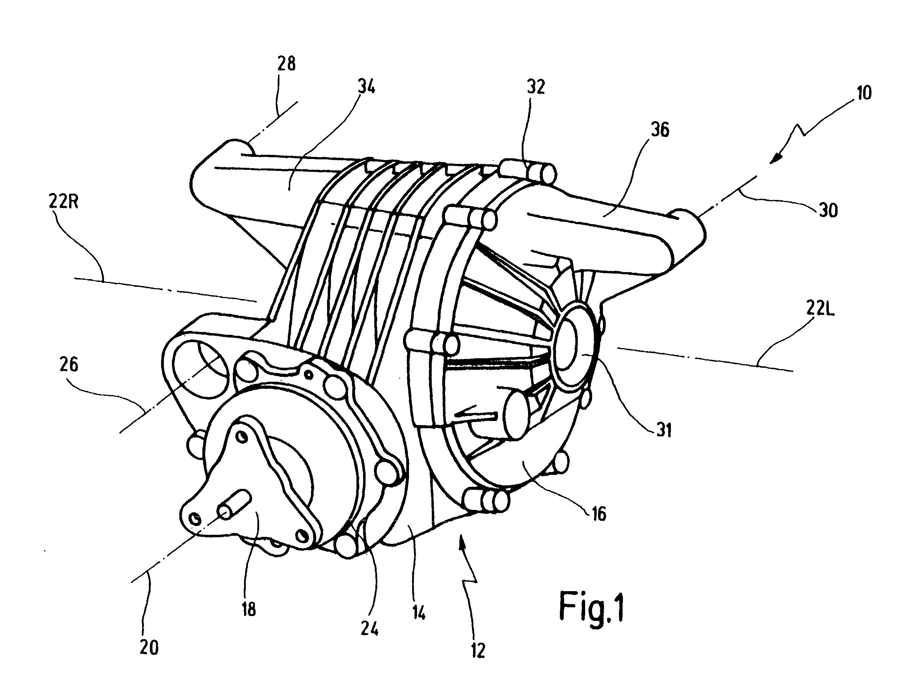

In Fig. 1 ist ein erfindungsgemäßes Achsgetriebe generell mit 10 bezeichnet.

Das Achsgetriebe 10 umfaßt ein Gehäuse 12. Das Gehäuse 12 besteht im wesentlichen aus einem Hauptgehäuse 14 und einem Gehäusedeckel 16.

Eine Eingangswelle 18 durchdringt das Hauptgehäuse 14 und ist entlang einer Eingangswellenachse 20 angeordnet, die im Falle eines Kraftfahrzeuges in Standardbauweise etwa parallel verläuft mit der Längsachse des Kraftfahrzeugs.

Das Achsgetriebe 10 umfaßt ferner zwei Ausgangswellen, die entlang einer Ausgangswellenachse 22L für ein linkes Hinterrad und einer Ausgangswellenachse 22R für ein rechtes Hinterrad des Kraftfahrzeugs angeordnet sind. Die Ausgangswellenachsen 22L, 22R verlaufen etwa senkrecht zur Längsachse des Fahrzeugs.

An dem Hauptgehäuse 14 ist ein Flansch 24 zur Befestigung eines Lagergehäuses für die Ritzelwelle vorgesehen, die mit der Kardanwelle über den Flansch 18 verbindbar ist.

An dem Hauptgehäuse 14 ist im Bereich des Flansches 24 ein Befestigungspunkt zur Lagerung des Gehäuses 12 an der Karosserie des Kraftfahrzeuges vorgesehen. Der Befestigungspunkt ist entlang einer Achse 26 ausgerichtet, die parallel verläuft zur Eingangswellenachse 20.

An dem Hauptgehäuse 14 ist ein weiterer Befestigungspunkt vorgesehen, dessen Befestigungsachse 28 ebenfalls parallel zur Eingangswellenachse 20 verläuft. An dem Gehäusedeckel 16 ist ein dritter Befestigungspunkt vorgesehen, dessen Achse 30 ebenfalls parallel zu der Eingangswellenachse 20 verläuft.

Das Hauptgehäuse 14 nimmt ein in Fig. 1 nicht näher dargestelltes Differentialgetriebe auf, dessen Funktionsweise allgemein bekannt ist und das deswegen vorliegend nicht erläutert wird. Das Differentialgetriebe umfaßt ein Tellerrad, das mit einem Ritzel der Eingangswelle 18 kämmt.

Eine Ausgangswelle für das rechte Hinterrad (auf der Achse 22R) durchdringt eine in Fig. 1 nicht dargestellte Öffnung in dem Hauptgehäuse 14. Eine Ausgangswelle für das linke Hinterrad (entlang der Achse 22L) durchdringt eine gegenüberliegende Öffnung 31 in dem Gehäusedeckel 16.

Der Gehäusedeckel 16 ist, in Längsrichtung des Kraftfahrzeuges gesehen, seitlich an dem Hauptgehäuse 14 angebracht und verschließt eine seitliche Öffnung in dem Hauptgehäuse 14.

Zwischen dem Hauptgehäuse 14 und dem Gehäusedeckel 16 liegt eine Trennebene 32, die parallel zu der Eingangswellenachse 20 (und senkrecht zu der Ausgangswellenachse 22) ausgerichtet ist.

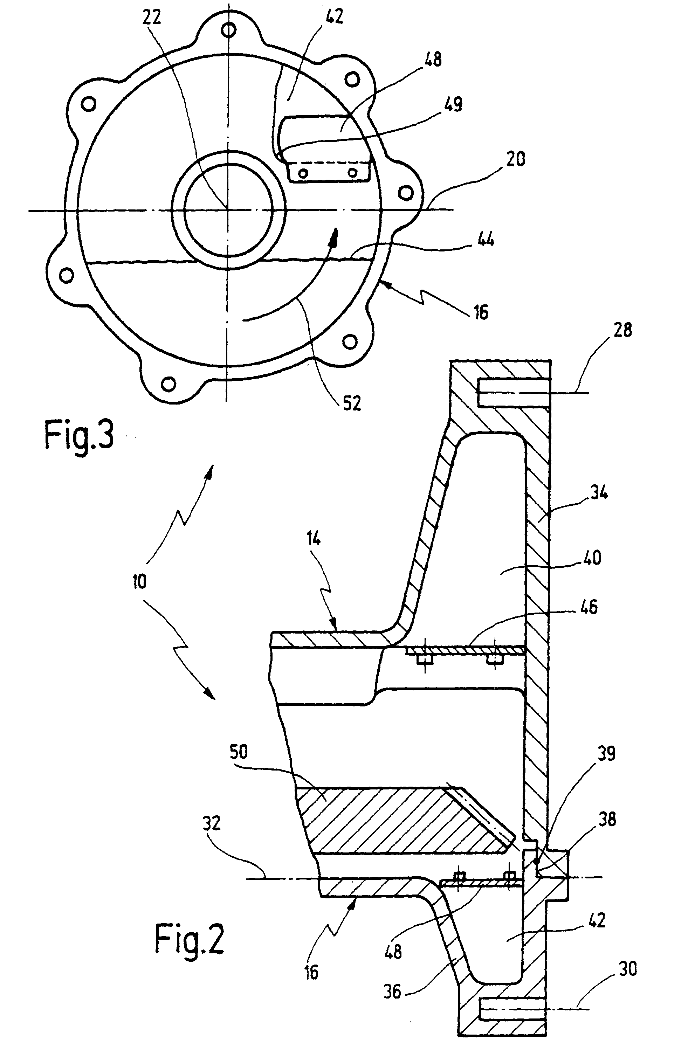

Wie es in Fig. 3 etwas deutlicher dargestellt ist, ist das Hauptgehäuse 14 an seiner Rückseite (die in Fig. 1 nicht dargestellt ist) geschlossen.

Die Montage des Differentialgetriebes und des Tellerrades in das Hauptgehäuse 14 erfolgt durch die seitliche Öffnung und ist daher besonders einfach. Auch die Einstellung des Differentialgetriebes ist erleichtert.

Durch die seitliche Anbringung des Gehäusedeckels 16 ist das Gehäuse 12 insgesamt um die Ausgangswellenachse 22 mit einer gleichmäßigen Festigkeit bzw. Steifigkeit versehen. Da die Ausgangswellenachse 22 mit einer nicht näher bezeichneten Differentialgetriebeachse zusammenfällt, ist die Vorspannung der Differentiallager am Umfang gleichmäßig zu realisieren. Es versteht sich, daß das Differential mit wenigstens einem Lager an dem Hauptgehäuse 14 und mit wenigstens einem weiteren Lager an dem Gehäusedeckel 16 gelagert ist.

Aufgrund der gleichmäßigen Steifigkeit des Gehäuses 12 um den Umfang der Differentialachse ist es möglich, die Gehäuseteile 14, 16 aus einem Leichtbaumaterial wie einer Aluminiumlegierung oder einer Magnesiumlegierung herzustellen.

Wie es schematisch auch in den Fig. 2 und 3 gezeigt ist, ist das Hauptgehäuse 14 mit einer seitlichen, also sich parallel zur Ausgangswellenachse 22 erstreckenden hohlen Ausbuchtung 34 versehen. Entsprechend ist der Gehäusedeckel 16 mit einer sich in die entgegengesetzte Richtung erstreckenden hohlen Ausbuchtung 36 versehen.

Die oben beschriebenen Befestigungspunkte 28 bzw. 30 sind an den Enden der Ausbuchtungen 34 bzw. 36 vorgesehen. Die Ausbuchtungen 34, 36, die einstückig mit dem Hauptgehäuse 14 bzw. dem Gehäusedeckel 16 ausgebildet sind, bilden folglich besonders steife Hohlträger.

Die Länge der Ausbuchtungen kann, wie es in Fig. 1 und alternativ in Fig. 2 gezeigt ist, in der Größenordnung von einem Viertel oder sogar mehr des Durchmessers des Gehäusedeckels 16 liegen.

Wie es insbesondere in Fig. 2 gezeigt ist, sind der Gehäusedeckel 16 und das Hauptgehäuse 14 im Bereich ihrer Trennfuge jeweils mit einem Schulterabschnitt 38 versehen, die gemeinsam einen Zentrierbund bilden. Hierdurch werden Lagerkräfte, die über den Befestigungspunkt 30 in den Gehäusedeckel eingeleitet werden, in Richtung der Eingangswellenachse 20 formschlüssig auf das Hauptgehäuse 14 übertragen. In Richtung der Ausgangswellenachse sind das Hauptgehäuse 14 und der Gehäusedeckel 16 durch eine Mehrzahl von nicht näher bezeichneten Schrauben miteinander verbunden.

Im Bereich der Schulterabschnitte 38 des Hauptgehäuses 14 bzw. des Gehäusedeckels 16 ist eine O-Ringdichtung 38 in die Trennfuge eingelegt, die für die Dichtung zwischen Gehäusedeckel 16 und Hauptgehäuse 14 sorgt.

Die Ausbuchtung 34 des Hauptgehäuses 14 bildet im Inneren einen seitlichen Hohlraum 40 (siehe Fig. 2). Entsprechend bildet die Ausbuchtung 36 des Gehäusedeckels 16 einen seitlichen Hohlraum 42.

Wie es in Fig. 3 gezeigt ist, sind die Hohlräume 40, 42 oberhalb eines Ruhe-Ölsumpfpegels 44 angeordnet.

Am Eingang des Hohlraumes 42 ist ein Staublech 48 mittels nicht näher bezeichneter Schrauben befestigt. Entsprechend ist am Eingang des Hohlraumes 40 ein Staublech 46 befestigt.

Wie es in Fig. 3 dargestellt ist, deckt das Staublech 48 den Hohlraum 42 im Bereich von dessen Boden weitgehend ab, so daß nur ein kleiner Abflußspalt 49 verbleibt. Statt des Abflußspaltes könnten auch Löcher in dem Staublech 48 vorgesehen sein. Das Staublech 48 deckt den Eingang des Hohlraums 42 etwa bis zur halben Höhe des Hohlraums 42 ab.

An dem Hohlraum 40 ist das Staublech 46 entsprechend angeordnet.

Wie es schematisch in Fig. 2 angedeutet ist, befindet sich im Inneren des Hauptgehäuses 14 ein Tellerrad 50 des nicht näher dargestellten Differentials. Die Ausbuchtungen 34, 36 bzw. deren Hohlräume 40, 42 sind so angeordnet, daß bei einer Drehung des Tellerrades 50 (in der in Fig. 3 bei 52 gezeigten Richtung bei Vorwärtsfahrt) Öl aus dem Ölsumpf nach oben geschöpft wird. Das Öl wird hierbei über die Staubleche 46 bzw. 48 hinüber in die Hohlräume 40, 42 geschleudert. Das Öl sammelt sich dann in den Hohlräumen 40, 42 bzw. staut sich dort auf und fließt nur vergleichsweise langsam über den Spalt 49 (oder eine andere entsprechende kleine Öffnung) ab.

Bei langsamer Fahrt und hohem Drehmoment entspricht die pro Zeiteinheit in die Hohlräume 40, 42 geschleuderte Ölmenge etwa der Ölmenge, die in der gleichen Zeiteinheit über den Spalt 49 abfließen kann. Damit steht bei niedrigen Drehzahlen und hohem Drehmoment das volle Ölvolumen zur Schmierung und Kühlung zur Verfügung.

Bei höheren Drehzahlen des Tellerrades 50 wird mehr Öl in die Hohlräume 40, 42 pro Zeiteinheit gefördert als ablaufen kann. Dadurch wird bei höheren Drehzahlen des Tellerrades 50 der Ölsumpf abgesenkt und die Ölpanscharbeit reduziert. Hierdurch ist die Wärmeentwicklung verringert und der Wirkungsgrad verbessert.

Bei dem in Fig. 1 gezeigten Achsantrieb 10 liegen die Befestigungspunkte 28, 30 vergleichsweise hoch, so daß die Ausbuchtungen 34, 36 oberhalb des Ölsumpfpegels 44 liegen.

Es versteht sich, daß dann, wenn die Befestigungspunkte 28, 30 auf einer Höhe unterhalb des Pegels 44 liegen sollen, zusätzliche Ausbuchtungen oberhalb des Pegels 44 vorgesehen werden können, um den Ölsumpf bei hohen Tellerraddrehzahlen abzusenken.

Die Ausbuchtungen 34, 36, die sich entlang der Ausgangswellenachse 22 erstrecken, können an dem Hauptgehäuse 14 bzw. dem Gehäusedeckel 16 auf einfache Weise vorgesehen werden. Da die Trennebene 32 zwischen diesen beiden Gehäuseteilen 14, 16 senkrecht zur Ausgangswellenachse 22 liegt, können die Gehäuseteile 14, 16 auch mit den Ausbuchtungen 34, 36 in einem einfachen Gußverfahren mit zweiteiliger Form hergestellt werden.

## Patentansprüche

1. Achsgetriebe (10) für ein Kraftfahrzeug, mit
- einem Gehäuse (12), das zwei Gehäuseteile (14, 16) aufweist, die jeweils wenigstens einen Befestigungspunkt (26-30) zur Lagerung des Gehäuses (12) an einer Karosserie des Kraftfahrzeuges aufweisen und entlang einer Trennebene (32) miteinander verbunden sind, wobei die Trennebene (32) in einem Winkel von mehr als 40° in bezug auf die Ausgangswellen (22) ausgerichtet ist,
- einer Eingangswelle (18), die mit einer Antriebswelle des Kraftfahrzeugs verbindbar ist,
- zwei Ausgangswellen (22L, 22R), die etwa senkrecht zu der Eingangswelle (18) ausgerichtet sind und die jeweils mit einem Rad des Kraftfahrzeugs verbindbar sind, und
- einem in dem Gehäuse gelagerten Differentialgetriebe (50),
**dadurch gekennzeichnet, daß**
wenigstens eines der zwei Gehäuseteile (14, 16) eine als Hohlträger dienende Ausbuchtung (34, 36) aufweist, an der außen ein Befestigungspunkt (28, 30) zum Lagern des Gehäuses (12) ausgebildet ist, die generell parallel zu den Ausgangswellen (22) ausgerichtet ist und die oberhalb eines Ruhe-Ölsumpfpegels (44) im Gehäuse (12) angeordnet ist, wobei innen am Eingang der Ausbuchtung (34, 36) ein Stauelement (46, 48) angeordnet ist, das einen Rückfluß von Öl, das in die Ausbuchtung (34, 36) geschleudert worden ist, zurück in das Gehäuse (12) begrenzt.

2. Achsgetriebe nach Anspruch 1, **dadurch gekennzeichnet, daß** die Trennebene (32) etwa senkrecht zu den Ausgangswellen (22) ausgerichtet ist.

3. Achsgetriebe nach Anspruch 1 oder 2, **dadurch gekennzeichnet, daß** das Stauelement (46, 48) als Staublech (46, 48) ausgebildet ist, das am Eingang der Ausbuchtung (34, 36) befestigt ist.

4. Achsgetriebe nach einem der Ansprüche 1 - 3, **dadurch gekennzeichnet, daß** die zwei Gehäuseteile (14, 16) quer zur Ausrichtung der Ausgangswellen (22) formschlüssig (38) miteinander verbunden sind.

5. Achsgetriebe nach einem der Ansprüche 1 - 4, **dadurch gekennzeichnet, daß** die zwei Gehäuseteile (14, 16) mittels einer O-Ringdichtung (39) gegeneinander abgedichtet sind.

6. Achsgetriebe nach einem der Ansprüche 1 - 5, **dadurch gekennzeichnet, daß** die zwei Gehäuseteile (14, 16) aus einem Leichtbaumaterial, insbesondere aus einer Magnesium- oder Aluminiumlegierung hergestellt sind.

## Claims

1. A differential gear (10) for a motor vehicle, comprising:
- a casing (12) which comprises two casing parts (14, 16), each of the casing parts (14, 16) comprising an attachment spot (26-30) for attaching the casing (12) to a body of the motor vehicle, the casing parts (14, 16) being connected to each other along a separation plane (32) which is arranged under an angle of more than 40 degrees with respect to the output shafts (22),
- an input shaft (18) which can be connected to a drive shaft of the motor vehicle,
- two output shafts (22L, 22R) which are arranged approximately perpendicular to the input shaft (18) and which can be connected to a respective wheel of the motor vehicle, and
- a differential (50) supported within the casing (12),
**characterized in that**
at least one of the two casing parts (14, 16) comprises a projection (34, 36) which serves as a hollow carrier, said projection (34, 36) comprising an attachment spot for attaching the casing (12) at its outside, said projection (34, 36) being arranged generally parallel with respect to the output shafts (22), and said projection (34, 36) being arranged above a rest oil level (44) within the casing (12), wherein a retaining element (46, 48) is arranged within the casing (12) at the entrance of the projection (34, 36), said retaining element (46, 48) limiting the flow of oil which has been thrown into the projection (34, 36), back into the casing (12).

2. The differential gear in accordance with claim 1, **characterized in that** the separation plane (32) is arranged approximately perpendicular to the output shafts (22).

3. The differential gear in accordance with claim 1 or 2, **characterized in that** the retaining element (46, 48) is a retaining sheet (46, 48) that is fastened at an entrance of the projection (34, 36).

4. The differential gear in accordance with any of claims 1 to 3, **characterized in that** the two casing parts (14, 16) are form-fittingly (38) connected to each other in a direction transverse to the direction of the output shafts (22).

5. The differential gear in accordance with any of claims 1 to 4, **characterized in that** the two casing parts (14, 16) are sealed to each other by means of an O-ring seal (39).

6. The differential gear in accordance with any of claims 1 to 5, **characterized in that** the two casing parts (14, 16) are manufactured from a light-weight material, particularly a magnesium alloy or an aluminum alloy.

## Revendications

1. Transmission d'essieu (10) pour un véhicule automobile, comportant
- un carter (12) qui comporte deux parties de carter (14, 16), lesquelles présentent chacune au moins un point de fixation (26-30) pour supporter le carter (12) sur une carrosserie du véhicule automobile, et sont reliées entre elles le long d'un plan de séparation (32), le plan de séparation (32) étant orienté suivant un angle de plus de 40° par rapport aux arbres de sortie (22),
- un arbre d'entrée (18) qui peut être relié à un arbre moteur du véhicule automobile,
- deux arbres de sortie (22L, 22R) qui sont orientés approximativement perpendiculairement à l'arbre d'entrée (18) et qui peuvent être reliés chacun à une roue du véhicule automobile, et
- un engrenage différentiel (50) monté dans le carter,
**caractérisée en ce que**
au moins l'une des deux parties de carter (14, 16) présente une courbure (34, 36) servant de poutre creuse sur laquelle est réalisé à l'extérieur un point de fixation (28, 30) pour le support du carter (12), laquelle est orientée généralement parallèlement aux arbres de sortie (22) et est disposée au-dessus d'un niveau de carter d'huile au repos (44) dans le carter (12), un élément de retenue (46, 48) étant disposé à l'intérieur, à l'entrée de la courbure (34, 36), lequel limite à l'intérieur du carter un reflux d'huile qui a été projeté dans la courbure (34, 36).

2. Transmission d'essieu selon la revendication 1,
**caractérisée en ce que**
le plan de séparation (32) est orienté approximativement perpendiculairement aux arbres de sortie (22).

3. Transmission d'essieu selon la revendication 1 ou 2,
**caractérisée en ce que**
l'élément de retenue (46, 48) est réalisé comme tôle de retenue (46, 48) qui est fixée à l'entrée de la courbure (34, 36).

4. Transmission d'essieu selon l'une des revendications 1 à 3,
**caractérisée en ce que**
les deux parties de carter (14, 16) sont reliées entre elles par complémentarité de forme (38), transversalement à l'orientation des arbres de sortie (22).

5. Transmission d'essieu selon l'une des revendications 1 à 4,
**caractérisée en ce que**
les deux parties de boîtier (14, 16) sont rendues étanches l'une par rapport à l'autre au moyen d'un joint torique (39).

6. Transmission d'essieu selon l'une des revendications 1 à 5,
**caractérisée en ce que**
les deux parties de boîtier (14, 16) sont fabriquées dans un matériau de construction léger, en particulier dans un alliage de magnésium ou d'aluminium.
